# EUROPEAN PATENT APPLICATION

(11) **EP 4 277 407 A1**
(43) Date of publication of application: **15.11.2023**
(21) Application number: 21916825.9
(22) Date of filing: 08.01.2021
(51) Int. Cl.: H04W 72/12

(54) **HARQ-ACK FEEDBACK METHOD AND APPARATUS, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: dompatent von Kreisler Selting Werner - Partnerschaft von Patent- und Rechtsanwälten mbB
(86) International application number: PCT/CN2021/070869
(87) International publication number: WO 2022/147769

(57) **Abstract**

The present invention provides a HARQ-ACK feedback method and apparatus, and a storage medium. The HARQ-ACK feedback method comprises: grouping at least two target physical downlink shared channels (PDSCHs) scheduled by target downlink control information (DCI) to obtain at least one PDSCH group, wherein each PDSCH group comprises at least two target PDSCHs; and feeding back one piece of HARQ-ACK information to the target PDSCHs that belong to the same PDSCH group, the HARQ-ACK information comprising one or more bits. The present invention can reduce overheads of HARQ-ACK feedback.

## Description

### TECHNICAL FIELD

The disclosure relates to the communication field, and in particular, to an HARQ-ACK feedback method, an HARQ-ACK feedback apparatus, and a storage medium.

### BACKGROUND

One downlink control information (DCI) schedules one physical downlink shared channel (PDSCH) or schedules one physical uplink shared channel (PUSCH) during data scheduling, to ensure the scheduling flexibility. In a new radio (NR) system, a subcarrier spacing (SCS) of 960 kilohertz (kHz) is used. Correspondingly, a duration of a slot is 1/64 millisecond (ms). If each PDSCH is separately scheduled by the DCI, it may lead to the high overhead for DCI blind detection.

Currently, multi-transmission-time-interval scheduling (multi-TTI scheduling) is proposed, that is, PDSCHs of multiple slots or PUSCHs of multiple slots are scheduled through one DCI, thereby reducing the number of DCIs and reducing the DCI blind detection complexity for a user equipment (UE). PDSCHs or PUSCHs scheduled by the multi-TTI scheduling may be used for repeat transmission of data or for transmitting different downlink data respectively.

### SUMMARY

To overcome the problems existing in the related art, embodiments of the disclosure provide an HARQ-ACK feedback method, an HARQ-ACK feedback apparatus, and a storage medium.

According to a first aspect of embodiments of the disclosure, an HARQ-ACK feedback method is provided. The method is applicable to a terminal. The method includes:
obtaining at least one physical downlink control channel (PDSCH) group by grouping at least two target PDSCHs scheduled by a target downlink control information (DCI); in which each PDSCH group includes at least two target PDSCHs; and
for target PDSCHs belonging to the same PDSCH group, feeding back one piece of HARQ-ACK information, in which the HARQ-ACK information includes one or more bits.

Optionally, for the target PDSCHs belonging to the same PDSCH group, feeding back the one piece of HARQ-ACK information, includes:
in response to the target PDSCHs belonging to the same PDSCH group being correctly decoded, feeding back an ACK through one bit for indicating that an HARQ-ACK result is successful; and
in response to any target PDSCH belonging to the same PDSCH group being incorrectly decoded, feeding back a negative ACK (NACK) through one bit for indicating that an HARQ-ACK result is failed.

Optionally, the method further includes:
receiving a target signaling; in which the target signaling is configured to instruct the terminal to perform HARQ-ACK bundling feedback on the at least two target PDSCHs scheduled by the target DCI.

Optionally, obtaining the at least one PDSCH group by grouping the at least two target PDSCHs scheduled by the target DCI includes:
determining a number of PDSCHs included in each PDSCH group according to configuration indication of the target signaling; and
obtaining the at least one PDSCH group by grouping the at least two target PDSCHs scheduled by the target DCI according to the number of PDSCHs included in each PDSCH group.

Optionally, the target DCI is configured to instruct the terminal whether to perform HARQ-ACK bundling feedback on the at least two target PDSCHs scheduled by the target DCI.

Optionally, obtaining the at least one PDSCH group by grouping the at least two target PDSCHs scheduled by the target DCI includes:
in response to determining to perform HARQ-ACK bundling feedback according to the target DCI, determining a number of PDSCHs included in each PDSCH group according to indication of the target DCI; and
obtaining the at least one PDSCH group by grouping the at least two target PDSCHs scheduled by the target DCI according to the number of PDSCHs included in each PDSCH group.

Optionally, obtaining the at least one PDSCH group by grouping the at least two target PDSCHs scheduled by the target DCI includes:
determining to perform HARQ-ACK bundling feedback according to a protocol agreement, and obtaining the at least one PDSCH group by grouping the at least two target PDSCHs scheduled by the target DCI.

Optionally, for the target PDSCHs belonging to the same PDSCH group, feeding back the one piece of HARQ-ACK information, includes:
for the target PDSCHs belonging to the same PDSCH group, feeding back the one piece of HARQ-ACK information on resources included in the same target physical uplink control channel (PUCCH).

Optionally, the method further includes:
in response to having configured both a first HARQ-ACK feedback mode based on code block groups and a second HARQ-ACK feedback mode based on PDSCH groups, using one of the first HARQ-ACK feedback mode or the second HARQ-ACK feedback mode as a target HARQ-ACK feedback mode according to a protocol agreement;
obtaining the at least one PDSCH group by grouping the at least two target PDSCHs scheduled by the target DCI includes:
in response to the target HARQ-ACK feedback mode being the second HARQ-ACK feedback mode, obtaining the at least one PDSCH group by grouping the at least two target PDSCHs scheduled by the target DCI.

Optionally, for the target PDSCHs belonging to the same PDSCH group, feeding back the one piece of HARQ-ACK information, includes:
in response to a persistent scheduling duration of the target PDSCHs belonging to the same PDSCH group being less than or equal to a channel coherence duration, for the target PDSCHs belonging to the same PDSCH group, feeding back the one piece of HARQ-ACK information.

According to a second aspect of embodiments of the disclosure, an HARQ-ACK feedback method is provided. The method is applicable to a base station. The method includes:
sending a target DCI for scheduling at least two target PDSCH; and
sending a target signaling, in which the target signaling is configured to instruct a terminal to perform HARQ-ACK bundling feedback on the at least two target PDSCHs scheduled by the target DCI.

Optionally, the target signaling is further configured to indicate a number of PDSCHs included in each PDSCH group.

According to a third aspect of embodiments of the disclosure, an HARQ-ACK feedback method is provided. The method is applicable to a base station. The method includes:
sending a target DCI for scheduling at least two target PDSCHs; in which the target DCI is configured to instruct a terminal whether to perform HARQ-ACK bundling feedback on the at least two target PDSCHs scheduled by the target DCI.

Optionally, the target DCI is further configured to indicate a number of PDSCHs included in each PDSCH group.

According to a fourth aspect of embodiments of the disclosure, an HARQ-ACK feedback apparatus is provided. The apparatus is applicable to a terminal. The apparatus includes:
a grouping module, configured to obtain at least one PDSCH group by grouping at least two target PDSCHs scheduled by a target DCI; in which each PDSCH group includes at least two target PDSCHs; and
an HARQ-ACK feedback module, is configured to, for target PDSCHs belonging to the same PDSCH group, feed back one piece of HARQ-ACK information, in which the HARQ-ACK information includes one or more bits.

According to a fifth aspect of embodiments of the disclosure, an HARQ-ACK feedback apparatus is provided. The apparatus is applicable to a base station. The apparatus includes:
a first sending module, configured to send a target DCI for scheduling at least two target PDSCHs; and
a second sending module, configured to send a target signaling, in which the target signaling is configured to instruct a terminal to perform HARQ-ACK bundling feedback on the at least two target PDSCHs scheduled by the target DCI.

According to a sixth aspect of embodiments of the disclosure, an HARQ-ACK feedback apparatus is provided. The apparatus is applicable to a base station. The apparatus includes:
a third sending module, configured to send a target DCI for scheduling at least two target PDSCHs; in which the target DCI is configured to instruct a terminal whether to perform HARQ-ACK bundling feedback on the at least two target PDSCHs scheduled by the target DCI.

According to a seventh aspect of embodiments of the disclosure, a computer-readable storage medium is provided. A computer program is stored in the storage medium. The computer program is configured to execute the HARQ-ACK feedback method described above in any one of the above-mentioned first aspect.

According to an eighth aspect of embodiments of the disclosure, a computer-readable storage medium is provided. A computer program is stored in the storage medium. The computer program is configured to execute the HARQ-ACK feedback method described above in any one of the second aspect or the third aspect.

According to a ninth aspect of embodiments of the disclosure, an HARQ-ACK feedback device is provided. The device includes:
a processor; and
a memory for storing instructions executable by the processor,

The processor is configured to perform the HARQ-ACK feedback method described above in any one of the first aspect.

According to a tenth aspect of embodiments of the disclosure, an HARQ-ACK feedback device is provided. The device includes:
a processor; and
a memory for storing instructions executable by the processor,

The processor is configured to perform the HARQ-ACK feedback method described above in any one of the second aspect or the third aspect.

The technical solutions provided in the embodiments of the disclosure may include the following beneficial effects.

In the embodiments of the disclosure, when the target DCI schedules the at least two target PDSCHs, the at least two target PDSCHs may be grouped, so as to feed back one piece of HARQ-ACK information for the target PDSCHs belonging to the same PDSCH group. The disclosure may reduce the HARQ-ACK feedback overhead in the case of multi-TTI scheduling.

In the embodiments of the disclosure, the terminal may perform HARQ-ACK bundling feedback according to the received target signaling. Alternatively, the terminal may determine whether to perform HARQ-ACK bundling feedback on the at least two target PDSCHs scheduled by the target DCI according to the indication of the target DCI. Alternatively, the terminal may determine whether to perform HARQ-ACK bundling feedback on the at least two target PDSCHs scheduled by the target DCI according to the protocol agreement. In the case of multi-TTI scheduling, the purpose of reducing the HARQ-ACK feedback overhead is achieved.

In the embodiments of the disclosure, the base station may send the target DCI for multi-TTI scheduling and send the target signaling to instruct the terminal to perform HARQ-ACK bundling feedback on the at least two target PDSCHs scheduled by the target DCI. In the case of multi-TTI scheduling, the purpose of reducing the HARQ-ACK feedback overhead is achieved.

In the embodiments of the disclosure, the base station may send the target DCI for multi-TTI scheduling and instruct, through the target DCI, the terminal whether to perform HARQ-ACK bundling feedback on the at least two target PDSCHs scheduled by the target DCI. Also in the case of multi-TTI scheduling, the purpose of reducing the HARQ-ACK feedback overhead is achieved.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram of a multi-TTI scheduling scenario according to some embodiments.
FIG. 2 is a schematic flowchart of an HARQ-ACK feedback method according to some embodiments.
FIG. 3 is a schematic flowchart of another HARQ-ACK feedback method according to some embodiments.
FIG. 4 is a schematic flowchart of another HARQ-ACK feedback method according to some embodiments.
FIG. 5 is a schematic flowchart of another HARQ-ACK feedback method according to some embodiments.
FIG. 6 is a schematic flowchart of another HARQ-ACK feedback method according to some embodiments.
FIG. 7 is a schematic flowchart of another HARQ-ACK feedback method according to some embodiments.
FIG. 8 is a schematic flowchart of another HARQ-ACK feedback method according to some embodiments.
FIG. 9 is a schematic flowchart of another HARQ-ACK feedback method according to some embodiments.
FIG. 10 is a schematic flowchart of another HARQ-ACK feedback method according to some embodiments.
FIG. 11 is a schematic flowchart of another HARQ-ACK feedback method according to some embodiments.
FIG. 12 is a schematic flowchart of another HARQ-ACK feedback method according to some embodiments.
FIG. 13 is a schematic flowchart of another HARQ-ACK feedback method according to some embodiments.
FIG. 14 is a schematic flowchart of another HARQ-ACK feedback method according to some embodiments.
FIG. 15 is a block diagram of an HARQ-ACK feedback apparatus according to some embodiments.
FIG. 16 is a block diagram of another HARQ-ACK feedback apparatus according to some embodiments.
FIG. 17 is a block diagram of another HARQ-ACK feedback apparatus according to some embodiments.
FIG. 18 is a schematic structural diagram of an HARQ-ACK feedback device according to some embodiments of the disclosure.
FIG. 19 is a schematic structural diagram of another HARQ-ACK feedback device according to some embodiments of the disclosure.

### DETAILED DESCRIPTION

Reference will now be made in detail to embodiments, examples of which are illustrated in the accompanying drawings. The following description refers to the accompanying drawings in which the same numbers in different accompanying drawings represent the same or similar elements unless otherwise represented. The implementations set forth in the following description of the embodiments do not represent all implementations consistent with the disclosure. Instead, they are merely examples of apparatuses and methods consistent with aspects related to the disclosure as recited in the appended claims.

Terms used in the disclosure are merely for describing specific examples and are not intended to limit the disclosure. The singular forms "one", "the", and "this" used in the disclosure and the appended claims are also intended to include a multiple form, unless other meanings are clearly represented in the context. It should also be understood that the term "and/or" used in the disclosure refers to any or all of possible combinations including one or more associated listed items.

It should be understood that although terms "first", "second", "third", and the like are used in the disclosure to describe various information, the information is not limited to the terms. These terms are merely used to differentiate information of a same type. For example, without departing from the scope of the disclosure, first information is also referred to as second information, and similarly the second information is also referred to as the first information. Depending on the context, for example, the term "if" used herein may be explained as "when" or "while", or "in response to ..., it is determined that".

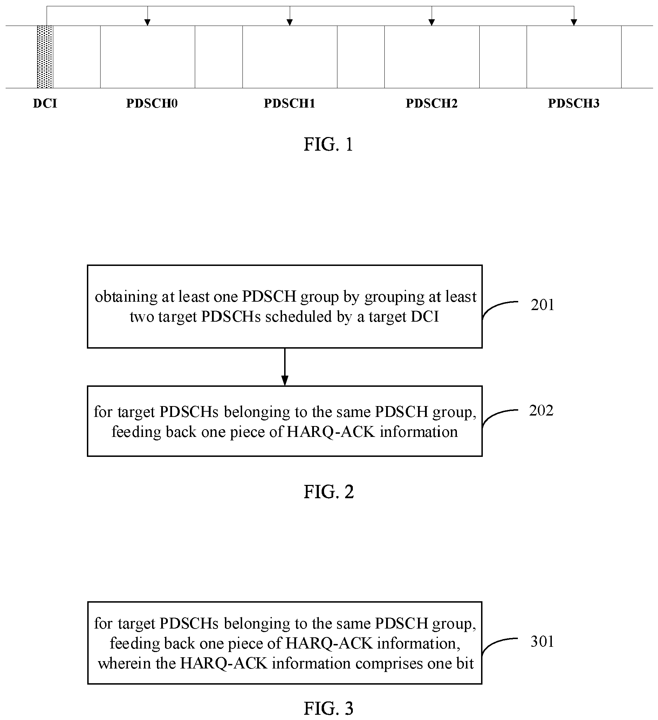

A multi-transmission-time-interval scheduling (multi-TTI scheduling) scenario is illustrated in FIG. 1, for example. Four PDSCHs are scheduled through one DCI. The four PDSCHs belong to different slots. The slots located by the four PDSCHs as illustrated in FIG. 1 are adjacent. It should be noted that, it is not excluded that slots located by PDSCHs are not adjacent, for example, two or more slots are spaced between every two PDSCHs.

FIG. 1 takes that a plurality of PDSCHs are scheduled through one DCI as an example. In practical applications, scheduling a plurality of PUSCHs through one DCI also belongs to the scope of the multi-TTI scheduling.

When the multi-TTI scheduling is used to schedule a plurality of identical transport blocks (TBs), the enhancement coverage may be achieved, which may be used for both uplink transmission and downlink transmission.

When the multi-TTI scheduling is used to schedule a plurality of different TBs, it may be used to reduce the number of DCIs and reduce the blind detection complexity for a terminal. Due to modulation coding schemes (MCSs) used by PDSCHs or PUSCHs scheduled in the multi-TTI scheduling are usually the same, the number of TTIs at one scheduling is also related to the speed of channel change. If the channel changes rapidly, the number of TTIs at one scheduling may be less to ensure that the MCS matches the channel and only one TTI may be scheduled. If the channel changes slowly, the number of TTIs that may be scheduled may be larger.

Since a slot is very short, a processing duration of one PDSCH may last for multiple slots. 16 parallel hybrid automatic repeat request (HARQ) processes used currently may not be able to satisfy the requirements. The system needs to support more parallel HARQ processes, such as 64 or 128 parallel HARQ processes. However, if HARQ-ACK (acknowledgment) feedback is performed for each HARQ process, the HARQ-ACK feedback overhead may be increased.

To solve the above problems, the disclosure provides an HARQ-ACK feedback solution. The following is an introduction from a terminal side.

Embodiments of the disclosure provide an HARQ-ACK feedback method, which may be applicable to a terminal. Referring to FIG. 2, FIG. 2 is a flowchart of an HARQ-ACK feedback method according to some embodiments. The method may include the following steps.

In step 201, at least one PDSCH group is obtained by grouping at least two target PDSCHs scheduled by a target DCI.

In some embodiments of the disclosure, the target DCI is a DCI used for the multi-TTI scheduling. The target DCI may schedule two or more target PDSCHs. The terminal may group the at least two target PDSCHs scheduled by the target DCI to obtain the at least one PDSCH group. Each PDSCH group includes two or more target PDSCHs.

For example, the target DCI schedules two target PDSCHs. After grouping, one PDSCH group is obtained and the PDSCH group includes the two target PDSCHs scheduled by the target DCI.

For another example, the target DCI schedules four target PDSCHs. After grouping, one PDSCH group is obtained and the PDSCH group includes the four target PDSCHs scheduled by the target DCI. Or after grouping, two PDSCH groups are obtained and each PDSCH group includes two target PDSCHs.

In step 202, for target PDSCHs belonging to the same PDSCH group, one piece of HARQ-ACK information is fed back.

In some embodiments of the disclosure, the terminal does not need to separately perform HARQ-ACK feedback for each target PDSCH, but may perform HARQ-ACK bundling feedback through one piece of HARQ-ACK information for the target PDSCHs in the same PDSCH group.

In a possible implementation, the HARQ-ACK information may include one bit.

In another possible implementation manner, the HARQ-ACK information may include a plurality of bits. The plurality of bits may be two or more bits, which is not limited in the disclosure.

In the above embodiments, when the target DCI schedules the at least two target PDSCHs, the at least two target PDSCHs may be grouped, so as to perform HARQ-ACK bundling feedback on the target PDSCHs belonging to the same PDSCH group. The disclosure may reduce the HARQ-ACK feedback overhead in the case of multi-TTI scheduling.

In some optional embodiments, referring to FIG. 3, FIG. 3 is a flowchart of an HARQ-ACK feedback method according to some embodiments. The method may include the following step.

In step 301, for target PDSCHs belonging to the same PDSCH group, one piece of HARQ-ACK information is fed back and the HARQ-ACK information includes one bit.

Regardless of the number of target PDSCHs in the same PDSCH group, the terminal may perform HARQ-ACK bundling feedback through one bit.

In an example, the terminal may feed back an acknowledgment (ACK) through one bit for indicating that an HARQ-ACK result is successful in response to the target PDSCHs belonging to the same PDSCH group being correctly decoded.

For example, if the terminal decodes all the target PDSCHs belonging to the same PDSCH group correctly, the terminal may feed back a bit value of 1 and the bit value of 1 corresponds to an ACK.

In another example, the terminal may feed back a negative acknowledgment (NACK) through one bit for indicating that an HARQ-ACK result is failed in response to any target PDSCH belonging to the same PDSCH group being incorrectly decoded.

For example, if the terminal incorrectly decodes any target PDSCH belonging to the same PDSCH group, the terminal may feed back a bit value of 0 and the bit value of 0 corresponds to an NACK.

The above is only an exemplary description. In practical applications, the schemes of using one bit to feed back the HARQ-ACK result of at least two PDSCHs included in the same PDSCH group should all belong to the scope of the disclosure.

In the above embodiments, the terminal may perform HARQ-ACK bundling feedback through one bit for the target PDSCHs belonging to the same PDSCH group, which reduces the HARQ-ACK feedback overhead.

In some optional embodiments, the terminal may perform HARQ-ACK bundling feedback through two or more bits for the target PDSCHs belonging to the same PDSCH group.

In an example, the number of correctly decoded and/or incorrectly decoded target PDSCHs in the PDSCH group may be indicated by a plurality of bits, including but not limited to two or more bits.

In another example, positions of correctly decoded and/or incorrectly decoded target PDSCHs in the PDSCH group may be indicated by two or more bits.

For example, if the same PDSCH group includes 2 target PDSCHs, the terminal may perform HARQ-ACK bundling feedback through two bits. The value of bits is 00, which may correspondingly indicate that the two target PDSCHs is incorrectly decoded. The value of bits is 01, which may correspondingly indicate that one of the target PDSCHs is correctly decoded and the other of the target PDSCHs is incorrectly decoded. The value of bits is 10, which may correspondingly indicate that both target PDSCHs are decoded correctly. The value of bits is 11, which may be used as a reserved item.

For another example, if the same PDSCH group includes 2 target PDSCHs, the terminal may perform HARQ-ACK bundling feedback through two bits. The value of bits is 00, which may correspondingly indicate that the two target PDSCHs is incorrectly decoded. The value of bits is 01, which may correspondingly indicate that the first one of the target PDSCHs is incorrectly decoded and the second one of the target PDSCHs is correctly decoded. The value of bits is 10, which may correspondingly indicate that the first one of the target PDSCHs is correctly decoded and the second one of the target PDSCHs is incorrectly decoded. The value of bits is 11, which may correspondingly indicate that both target PDSCHs are decoded correctly.

The above is only an exemplary description. In practical applications, the schemes of using two or more bits to feed back the HARQ-ACK result of the PDSCHs in the same PDSCH group should all belong to the scope of the disclosure.

In the above embodiments, the terminal may perform HARQ-ACK bundling feedback through the plurality of bits for the target PDSCHs belonging to the same PDSCH group, so as to reduce the HARQ-ACK feedback overhead.

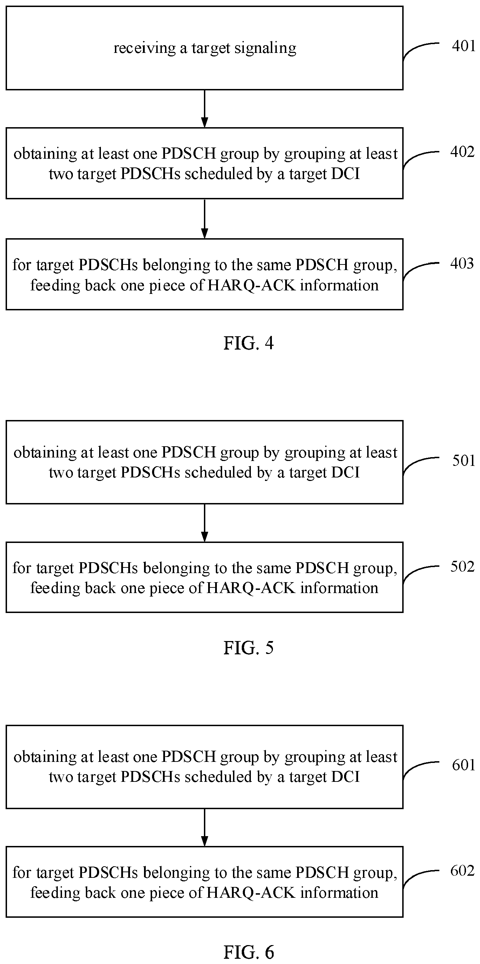

In some optional embodiments, referring to FIG. 4, FIG. 4 is a flowchart of an HARQ-ACK feedback method according to some embodiments. The method may include the following steps.

In step 401, a target signaling is received.

The target signaling is configured to instruct the terminal to perform HARQ-ACK bundling feedback on the at least two target PDSCHs scheduled by the target DCI. Optionally, the target signaling includes but is not limited to a high-level signaling. The high-level signaling includes but is not limited to a radio resource control (RRC) signaling and a media access control address (MAC) signaling.

In step 402, at least one PDSCH group is obtained by grouping at least two target PDSCHs scheduled by a target DCI.

In some possible embodiments, the target signaling does not indicate the number of PDSCHs included in each PDSCH group and the terminal may directly group the at least two target PDSCHs scheduled by the target DCI into the same PDSCH group.

In other possible embodiments, the target signaling indicates the number of PDSCHs included in each PDSCH group and the terminal may determine the number of PDSCHs included in each PDSCH group according to indication of the target signaling. Further, the terminal groups the at least two target PDSCHs scheduled by the target DCI according to the number of PDSCHs included in each PDSCH group, thereby obtaining the at least one PDSCH group.

For example, if the target signaling indicates that the number of PDSCHs included in each PDSCH group is 2 and the target DCI schedules 2 target PDSCHs, the terminal may obtain one PDSCH group. For another example, if the target signaling indicates that the number of PDSCHs included in each PDSCH group is 2 and the target DCI schedules 4 target PDSCHs, the terminal may obtain 2 PDSCH groups and each PDSCH group includes 2 target PDSCHs.

In other possible embodiments, the target signaling does not indicate the number of PDSCHs included in each PDSCH group and the terminal may also determine the number of PDSCHs included in each PDSCH group according to indication of the target DCI or a protocol agreement. Therefore, the at least two target PDSCH scheduled by the target DCI are grouped to obtain the at least one PDSCH group. The specific grouping manner is not limited in the disclosure.

In step 403, for target PDSCHs belonging to the same PDSCH group, one piece of HARQ-ACK information is fed back.

In the embodiments of the disclosure, the terminal may perform HARQ-ACK bundling feedback through one bit for the target PDSCHs belonging to the same PDSCH group, that is, the HARQ-ACK information includes one bit. Alternatively, the terminal may perform HARQ-ACK bundling feedback through two or more bits, that is, the HARQ-ACK information includes the plurality of bits.

In the above embodiments, the terminal may perform HARQ-ACK bundling feedback on the at least two target PDSCHs scheduled by the target DCI according to the received target signaling. In the case of multi-TTI scheduling, the purpose of reducing the HARQ-ACK feedback overhead is achieved.

In some optional embodiments, the base station does not send the target signaling to the terminal and the terminal may perform HARQ-ACK feedback on each of the at least two target PDSCHs scheduled by the target DCI according to the relevant standard.

The base station sends the target signaling to the terminal and the terminal may determine to perform HARQ-ACK bundling feedback according to the target signaling.

In the above-mentioned embodiments, the manner of flexibly instructing the terminal to perform HARQ-ACK feedback on the at least two target PDSCHs scheduled by the target DCI may be highly usable under the condition of less modification to the standard.

In some optional embodiments, referring to FIG. 5, FIG. 5 is a flowchart of an HARQ-ACK feedback method according to some embodiments. The method may include the following steps.

In step 501, at least one PDSCH group is obtained by grouping at least two target PDSCHs scheduled by a target DCI.

In some embodiments of the disclosure, the target DCI may be configured to instruct the terminal whether to perform HARQ-ACK bundling feedback on the at least two target PDSCHs scheduled by the target DCI.

In some possible embodiments, the target DCI may include a newly added first information field. When the first information field is set to a preset value, the terminal determines to perform HARQ-ACK bundling feedback on the at least two target PDSCHs scheduled by the target DCI.

In other possible embodiments, the target DCI does not include the first information field for indicating to perform HARQ-ACK bundling feedback and the terminal determines not to perform HARQ-ACK bundling feedback on the at least two target PDSCHs scheduled by the target DCI. Or the target DCI includes the first information field but the first information field is set to other preset value, and the terminal determines not to perform HARQ-ACK bundling feedback on the at least two target PDSCHs scheduled by the target DCI.

In other possible embodiments, the target DCI includes a second information field for indicating the number of PDSCHs included in each PDSCH group, and the terminal determines to perform HARQ-ACK bundling feedback on the at least two target PDSCHs scheduled by the target DCI.

In other possible embodiments, the target DCI includes the first information field and the second information field. The terminal determines to perform HARQ-ACK bundling feedback on the at least two target PDSCHs scheduled by the target DCI according to the first information field, and the terminal subsequently determines, according to the second information field, the number of PDSCHs included in each group when grouping the at least two target PDSCHs scheduled by the target DCI.

In the embodiments of the disclosure, after the terminal determines to perform HARQ-ACK bundling feedback in any of the foregoing manners, the terminal may determine the number of PDSCHs included in each PDSCH group.

In some possible embodiments, the target DCI does not indicate the number of PDSCHs included in each PDSCH group, and the terminal may directly group all target PDSCHs scheduled by the target DCI into the same PDSCH group.

In other possible embodiments, the target DCI indicates the number of PDSCHs included in each PDSCH group, and the terminal may first determine the number of PDSCHs included in each PDSCH group according to indication of the target DCI, Further, the terminal groups the at least two target PDSCHs scheduled by the target DCI according to the number of PDSCHs included in each PDSCH group to obtain the at least one PDSCH group.

In other possible embodiments, the target DCI does not indicate the number of PDSCHs included in each PDSCH group, and the terminal may determine the number of PDSCHs included in each PDSCH group according to indication of the target signaling or the protocol agreement. Further, the terminal groups the at least two target PDSCHs scheduled by the target DCI according to the number of PDSCHs included in each PDSCH group to obtain the at least one PDSCH group. The target signaling includes but is not limited to a high-level signaling. The high-level signaling includes but is not limited to an RRC signaling and an MAC signaling.

In step 502, for target PDSCHs belonging to the same PDSCH group, one piece of HARQ-ACK information is fed back.

In the embodiments of the disclosure, the terminal may perform HARQ-ACK bundling feedback through one bit for the target PDSCHs belonging to the same PDSCH group. Or the terminal may perform HARQ-ACK bundling feedback through two or more bits.

In the above embodiments, the terminal may perform HARQ-ACK bundling feedback on the at least two target PDSCHs scheduled by the target DCI according to the indication of the target DCI. In the case of multi-TTI scheduling, the purpose of reducing the HARQ-ACK feedback overhead is achieved.

In some optional embodiments, referring to FIG. 6, FIG. 6 is a flowchart of an HARQ-ACK feedback method according to some embodiments. The method may include the following steps.

In step 601, at least one PDSCH group is obtained by grouping at least two target PDSCHs scheduled by a target DCI.

In the embodiments of the disclosure, the terminal may directly determine whether to perform HARQ-ACK bundling feedback on the at least two target PDSCHs scheduled by the target DCI according to the protocol agreement.

In some possible embodiments, the protocol stipulates that the terminal performs HARQ-ACK bundling feedback, and the terminal may directly group all target PDSCHs scheduled by the target DCI into the same PDSCH group.

In other possible embodiments, the protocol stipulates that the terminal performs HARQ-ACK bundling feedback, and the protocol stipulates the number of PDSCHs included in each PDSCH group. The terminal may first determine the number of PDSCH included in each PDSCH group according to the protocol agreement and further group the at least two target PDSCHs scheduled by the target DCI to obtain the at least one PDSCH group.

In other possible embodiments, the protocol stipulates that the terminal performs HARQ-ACK bundling feedback, and the protocol stipulates the number of PDSCHs included in each PDSCH group, and the number includes a plurality of candidate values, and the terminal may select one of them as the number of PDSCHs included in each PDSCH group and further group the at least two target PDSCHs scheduled by the target DCI to obtain the at least one PDSCH group.

For example, the protocol stipulates that the number of PDSCHs included in each PDSCH group may be 2, 4, 8, etc. The target DCI schedules 2 target PDSCHs and the terminal may determine that the number of PDSCHs included in each PDSCH group is 2.

For another example, the protocol stipulates that the number of PDSCHs included in each PDSCH group may be 2, 4, 8, etc. The target DCI schedules 4 target PDSCHs and the terminal may determine that the number of PDSCHs included in each PDSCH group is 2 or 4.

In other possible embodiments, the protocol stipulates that the terminal performs HARQ-ACK bundling feedback, and the terminal determines the number of PDSCHs included in each PDSCH group according to indication of the target signaling or target DCI and further group the at least two target PDSCHs scheduled by the target DCI to obtain the at least one PDSCH group.

In step 602, for target PDSCHs belonging to the same PDSCH group, one piece of HARQ-ACK information is fed back.

In the embodiments of the disclosure, the terminal may perform HARQ-ACK bundling feedback through one bit for the target PDSCHs belonging to the same PDSCH group. Or the terminal may perform HARQ-ACK bundling feedback through two or more bits.

In the above embodiments, the terminal may group the at least two target PDSCHs scheduled by the target DCI according to the protocol agreement, and perform HARQ-ACK feedback according to the PDSCH group. In the case of multi-TTI scheduling, the purpose of reducing the HARQ-ACK feedback overhead is achieved.

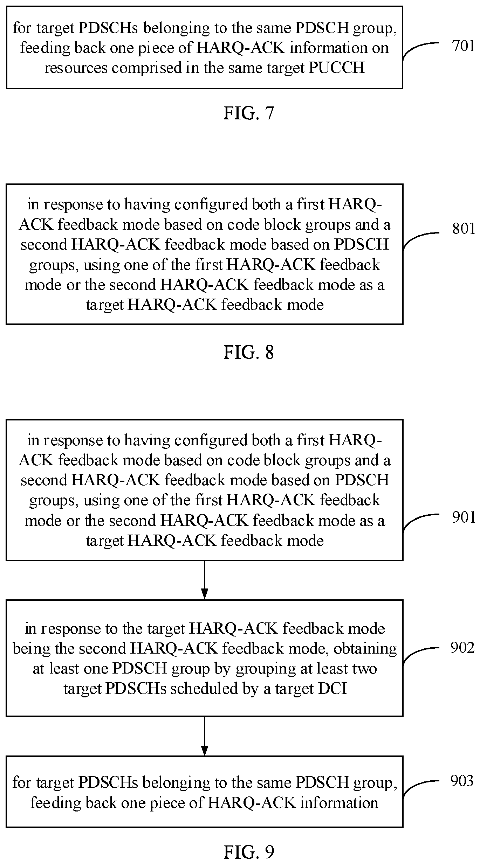

In some optional embodiments, referring to FIG. 7, FIG. 7 is a flowchart of an HARQ-ACK feedback method according to some embodiments. The method may include the following step.

In step 701, for the target PDSCHs belonging to the same PDSCH group, the one piece of HARQ-ACK information is fed back on resources included in the same target physical uplink control channel (PUCCH).

In the case where one DCI schedules one PDSCH, two parameters are indicated in the DCI, which are used to determine the position of the PUCCH resource used by the HARQ-ACK feedback information of the PDSCH. One of the parameters is an interval length kl between a slot located by the PDSCH and a slot located by the HARQ-ACK, and k1 takes the slot as the unit. Another parameter is an identifier of the PUCCH resource used by the HARQ-ACK. By these two parameters and the number of bits of uplink control information (UCI) to be transmitted on the PUCCH, the terminal may determine the HARQ-ACK transmission resource of the PDSCH.

In some embodiments of the disclosure, the target DCI may indicate transmission resources for HARQ-ACK feedback for each PDSCH group.

In an example, for the target PDSCHs belonging to the same PDSCH group, HARQ-ACK bundling feedback needs to be performed on the resources included in the same target PUCCH. Optionally, one piece of HARQ-ACK information may be fed back and the HARQ-ACK information includes one or more bits.

In another example, for target PDSCHs of different PDSCH groups, HARQ-ACK bundling feedback may be performed on resources included in the same PUCCH. Alternatively, for target PDSCHs of different PDSCH groups, HARQ-ACK bundling feedback may be performed on resources included in different PUCCHs. The terminal may determine to perform HARQ-ACK bundling feedback corresponding to different PDSCH groups on resources included in the same or different PUCCHs according to indication of the target DCI, which is not limited in the disclosure.

For example, the target DCI schedules 4 target PDSCHs. 4 target PDSCHs are grouped into 2 PDSCH groups. Each PDSCH group includes 2 target PDSCHs. The target DCI provides two parameters. These two parameters indicate the same PUCCH and the terminal needs to feed back the HARQ-ACK bundling results respectively corresponding to the two PDSCH groups on the resources of the PUCCH.

For another example, the target DCI schedules 4 target PDSCHs. 4 target PDSCHs are grouped into 2 PDSCH groups. Each PDSCH group includes 2 target PDSCHs. The target DCI indicates two different PUCCHs and the terminal may feed back the HARQ-ACK bundling result corresponding to the first PDSCH group on the resources included in the first PUCCH and the HARQ-ACK bundling result corresponding to the second PDSCH group on the resources included in the second PUCCH.

In the above embodiments, for the target PDSCHs belonging to the same PDSCH group, it is necessary to perform HARQ-ACK bundling feedback on the resources included in the same target PUCCH, so that the base station side determines the HARQ-ACK feedback result corresponding to the same PDSCH group, which has the high availability.

In some optional embodiments, referring to FIG. 8, FIG. 8 is a flowchart of an HARQ-ACK feedback method according to some embodiments. The method may include the following step.

In step 801, in response to having configured both a first HARQ-ACK feedback mode based on code block groups and a second HARQ-ACK feedback mode based on PDSCH groups, one of the first HARQ-ACK feedback mode or the second HARQ-ACK feedback mode is used as a target HARQ-ACK feedback mode according to a protocol agreement.

The HARQ-ACK feedback mode based on code block groups includes: dividing one TB into at least one code block (CB) and grouping a plurality of CBs into several CB groups (CBGs). The way of feeding back one piece of HARQ-ACK information for each CB group is the CBG-based HARQ-ACK (the HARQ-ACK feedback mode based on code block groups) feedback mode. The motivation of CBG feedback is to improve the efficiency of HARQ retransmission, that is, only the CBG with the error needs to be retransmitted and the entire TB does not need to be retransmitted. But the corresponding cost is the increased HARQ-ACK overhead.

For example, 1 TB is divided into 8 CBs, these 8 CBs are grouped into 4 CBGs, and each CBG includes 2 CBs. For each CBG, 1 bit of HARQ-ACK information is fed back and it requires a total of 4 bits to be fed back.

In the embodiments of the disclosure, due to the configuration problem of the base station, the terminal is configured with the first HARQ-ACK feedback mode based on code block groups and the second HARQ-ACK feedback mode based on PDSCH groups at the same time.

In some possible embodiments, the terminal may select one of the HARQ-ACK feedback modes as the target HARQ-ACK feedback mode based on a protocol agreement. Subsequently, HARQ-ACK feedback may be performed based on the target HARQ-ACK feedback manner.

Of course, the terminal may also select one of the HARQ-ACK feedback modes as the target HARQ-ACK feedback mode according to indication of the base station or other manners, which is not limited in the disclosure.

In the above-mentioned embodiments, in the case where the first HARQ-ACK feedback mode based on code block groups and the second HARQ-ACK feedback mode based on PDSCH groups are configured at the same time for the terminal, the terminal may select one of the feedback modes as the subsequent HARQ-ACK feedback mode, which avoids the problem that the terminal HARQ-ACK feedback errors are caused by the base station configuration and has the high availability.

In some optional embodiments, referring to FIG. 9, FIG. 9 is a flowchart of an HARQ-ACK feedback method according to some embodiments. The method may include the following steps.

In step 901, in response to having configured both a first HARQ-ACK feedback mode based on code block groups and a second HARQ-ACK feedback mode based on PDSCH groups, one of the first HARQ-ACK feedback mode or the second HARQ-ACK feedback mode is used as a target HARQ-ACK feedback mode according to a protocol agreement.

In some embodiments of the disclosure, the terminal may use, but is not limited to, according to the protocol agreement, one of the first HARQ-ACK feedback mode or the second HARQ-ACK feedback mode as the target HARQ-ACK feedback mode.

In step 902, in response to the target HARQ-ACK feedback mode being the second HARQ-ACK feedback mode, at least one PDSCH group is obtained by grouping at least two target PDSCHs scheduled by a target DCI.

In the embodiments of the disclosure, the terminal may group the at least two target PDSCHs scheduled by the target DCI in the case of determining to adopt the second HARQ-ACK feedback mode based on PDSCH groups, so as to subsequently perform HARQ-ACK feedback based on PDSCH groups.

In step 903, for target PDSCHs belonging to the same PDSCH group, one piece of HARQ-ACK information is fed back.

In the above embodiments, the terminal is configured with the first HARQ-ACK feedback mode based on code block groups and the second HARQ-ACK feedback mode based on PDSCH groups at the same time, and when the target HARQ-ACK feedback mode is the second HARQ-ACK feedback mode, HARQ-ACK bundling feedback may be performed to avoid the problem that the terminal HARQ-ACK feedback errors are caused by the base station configuration, and the availability is high.

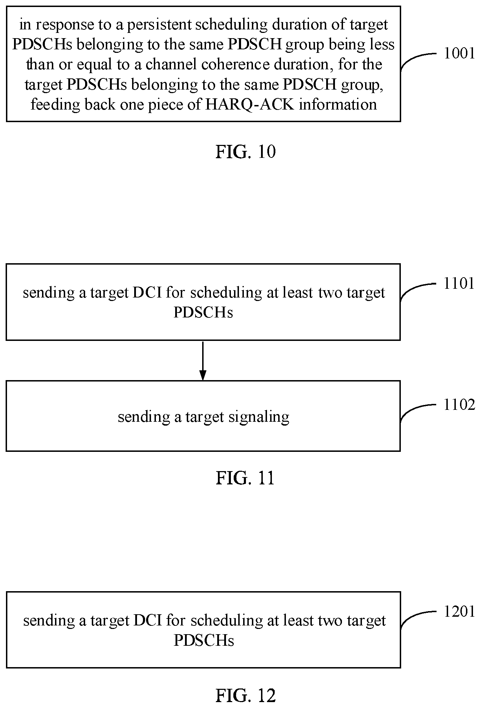

In some optional embodiments, referring to FIG. 10, FIG. 10 is a flowchart of an HARQ-ACK feedback method according to some embodiments. The method may include the following step.

In step 1001, in response to a persistent scheduling duration of target PDSCHs belonging to the same PDSCH group being less than or equal to a channel coherence duration, for the target PDSCHs belonging to the same PDSCH group, one piece of HARQ-ACK information is fed back.

In the embodiments of the disclosure, the channel coherence duration refers to a duration during which a change value of a channel interference value and/or noise value is less than or equal to a preset threshold value. That is, within the channel coherence duration, the channel condition changes little. The terminal may perform HARQ-ACK bundling feedback when the persistent scheduling duration of the target PDSCHs belonging to the same PDSCH group is less than or equal to the channel coherence duration. Optionally, one piece of HARQ-ACK information is fed back and the HARQ-ACK information includes one or more bits.

For example, when a subcarrier spacing (SCS) is 960 kilohertz (kHz), the target DCI schedules 4 target PDSCHs, the 4 target PDSCHs are grouped into one group, the persistent scheduling duration is 4 slots, and an absolute duration is 1/16 ms. This duration is less than the channel coherence duration, that is, during this duration, the channel interference value and/or noise value change very little, and the demodulation conditions of the four target PDSCHs are relatively consistent, so HARQ-ACK bundling feedback may be performed.

In the above embodiments, the terminal may perform HARQ-ACK bundling feedback when the persistent scheduling duration of the target PDSCHs belonging to the same PDSCH group is less than or equal to the channel coherence duration, which reduces the HARQ-ACK feedback overhead and improves the accuracy of HARQ-ACK feedback based on PDSCH groups.

Next, the HARQ-ACK feedback solution provided in the embodiments of the disclosure will be introduced from a base station side.

Embodiments of the disclosure provides an HARQ-ACK feedback method. The method is applicable to a base station. Referring to FIG. 11, FIG. 11 is a flowchart of an HARQ-ACK feedback method according to some embodiments. The method may include the following steps.

In step 1101, a target DCI for scheduling at least two target PDSCHs is sent.

In step 1102, a target signaling is sent.

In some embodiments of the disclosure, an execution order of step 801 and step 802 is not limited. The target signaling is configured to instruct a terminal to perform HARQ-ACK bundling feedback on the at least two target PDSCHs scheduled by the target DCI. The target signaling includes but is not limited to a high-level signaling. The high-level signaling includes but is not limited to an RRC signaling and a MAC signaling. After receiving the target signaling, the terminal performs HARQ-ACK bundling feedback according to indication of the target signaling.

In the above embodiments, the base station may send the target DCI for the multi-TTI scheduling and send the target signaling to instruct the terminal to perform HARQ-ACK bundling feedback on the at least two target PDSCHs scheduled by the target DCI. In the case of multi-TTI scheduling, the purpose of reducing the HARQ-ACK feedback overhead is achieved.

In some optional embodiments, the target signaling is further configured to indicate the number of PDSCHs included in each PDSCH group.

In the above embodiments, the target signaling sent by the base station may also indicate the number of PDSCHs included in each PDSCH group, so that the terminal may perform PDSCH grouping. Therefore, HARQ-ACK feedback is performed based on PDSCH groups, which is easy to implement and has the high availability.

Embodiments of the disclosure provides an HARQ-ACK feedback method. The method is applicable to a base station. Referring to FIG. 12, FIG. 12 is a flowchart of an HARQ-ACK feedback method according to some embodiments. The method may include the following step.

In step 1201, a target DCI for scheduling at least two target PDSCHs is sent.

In the embodiments of the disclosure, the target DCI is configured to instruct a terminal whether to perform HARQ-ACK bundling feedback on the at least two target PDSCHs scheduled by the target DCI.

In an example, the base station may add newly a first information field to the target DCI. The first information field may occupy 1 bit or more bits, which is not limited in the disclosure. The first information field is configured to instruct the terminal to perform HARQ-ACK bundling feedback on the at least two target PDSCHs scheduled by the target DCI.

For example, when the target DCI includes the first information field and the first information field is set to 1, it is used to instruct the terminal to perform HARQ-ACK feedback based on PDSCH groups on the at least two target PDSCHs scheduled by the target DCI. If the target DCI does not include the first information field, or the target DCI includes the first information field but the bit value of the first information field is set to 0, the terminal may be instructed to perform HARQ-ACK feedback separately on each target PDSCH scheduled by the target DCI.

In the above embodiments, the base station may send the target DCI for the multi-TTI scheduling and instruct the terminal through the target DCI whether to perform HARQ-ACK bundling feedback on the at least two target PDSCHs scheduled by the target DCI. Also in the case of multi-TTI scheduling, the purpose of reducing the HARQ-ACK feedback overhead is achieved.

In some optional embodiments, the target DCI is further configured to indicate the number of PDSCHs included in each PDSCH group.

In some embodiments of the disclosure, the target DCI may include a second information field. The second information field is configured to indicate the number of PDSCHs included in each PDSCH group.

In the above embodiments, the base station may indicate the number of PDSCHs included in each PDSCH group through the target DCI, so that the terminal may group the at least two target PDSCHs scheduled by the target DCI, and subsequently perform HARQ-ACK feedback based on PDSCH groups, which is highly usable.

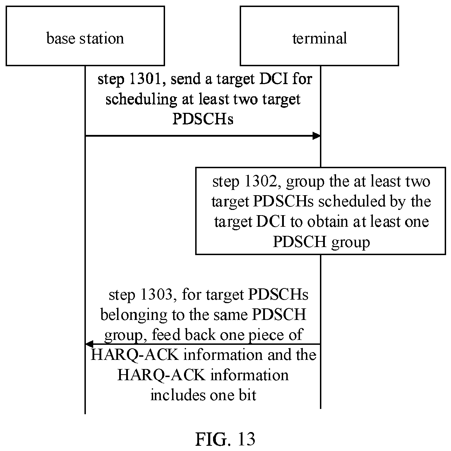

Referring to FIG. 13, FIG. 13 is a flowchart of an HARQ-ACK feedback method according to some embodiments. The method may include the following steps.

In step 1301, the base station sends a target DCI for scheduling at least two target PDSCHs.

In step 1302, the terminal groups the at least two target PDSCHs scheduled by the target DCI to obtain at least one PDSCH group.

In the embodiments of the disclosure, the target DCI is configured to instruct the terminal to perform HARQ-ACK bundling feedback on the at least two target PDSCHs scheduled by the target DCI. The terminal may perform HARQ-ACK bundling feedback according to indication of the target DCI. Or the terminal may directly perform HARQ-ACK bundling feedback according to the protocol agreement.

Further, the terminal may group the at least two target PDSCHs scheduled by the target DCI according to the number of PDSCHs included in each PDSCH group, indicated by the target DCI. Alternatively, the terminal may group the at least two target PDSCHs scheduled by the target DCI according to the number of PDSCHs included in each PDSCH group, indicated by the target signaling. Alternatively, the terminal may group the at least two target PDSCHs scheduled by the target DCI according to the protocol agreement. Alternatively, the terminal directly groups all target PDSCHs scheduled by the target DCI into one PDSCH group according to the protocol agreement.

In step 1303, for target PDSCHs belonging to the same PDSCH group, the terminal feeds back one piece of HARQ-ACK information and the HARQ-ACK information includes one bit.

In the embodiments of the disclosure, for the target PDSCHs belonging to the same PDSCH group, HARQ-ACK bundling feedback is performed through one bit. For the target PDSCHs belonging to the same PDSCH group, HARQ-ACK bundling feedback is performed on the resources included in the same target PUCCH. Optionally, the HARQ-ACK information may include one bit or may include two or more bits.

In the above embodiments, when the target DCI schedules the at least two target PDSCHs, the target DCI may instruct the terminal to group the at least two target PDSCHs, so as to perform HARQ-ACK bundling feedback on the target PDSCHs belonging to the same PDSCH group. The disclosure may reduce the HARQ-ACK feedback overhead in the case of multi-TTI scheduling.

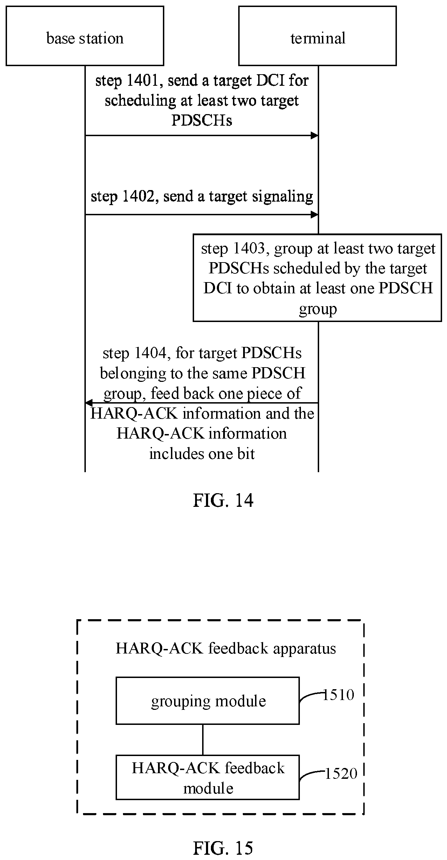

Referring to FIG. 14, FIG. 14 is a flowchart of an HARQ-ACK feedback method according to some embodiments. The method may include the following steps.

In step 1401, the base station sends a target DCI for scheduling at least two target PDSCHs.

In step 1402, the base station sends a target signaling.

The target signaling is configured to instruct the terminal to perform HARQ-ACK bundling feedback on the at least two target PDSCHs scheduled by the target DCI.

In step 1403, the terminal groups at least two target PDSCHs scheduled by the target DCI to obtain at least one PDSCH group.

The terminal may group according to the number of PDSCHs included in each PDSCH group indicated by the target DCI. Alternatively, the terminal may group according to the number of PDSCHs included in each PDSCH group indicated by the target signaling. Alternatively, the terminals may group according to the protocol. Alternatively, the terminal directly groups all target PDSCHs scheduled by the target DCI into one PDSCH group.

In step 1404, for target PDSCHs belonging to the same PDSCH group, the terminal feeds back one piece of HARQ-ACK information and the HARQ-ACK information includes one bit.

For the target PDSCHs belonging to the same PDSCH group, HARQ-ACK bundling feedback is performed through one bit. For the target PDSCHs belonging to the same PDSCH group, HARQ-ACK bundling feedback is performed on the resources included in the same target PUCCH. Of course, the above-mentioned HARQ-ACK information may also include two or more bits, which is not limited in the disclosure.

In the above embodiments, when the target DCI schedules the at least two target PDSCHs, the terminal may be instructed through the target signaling to group the at least two target PDSCHs, so as to perform HARQ-ACK binding feedback on the target PDSCHs belonging to the same PDSCH group. The disclosure may reduce the HARQ-ACK feedback overhead in the case of multi-TTI scheduling.

Corresponding to the foregoing application function implementation method embodiments, the disclosure further provides application function implementation apparatus embodiments.

Referring to FIG. 15, FIG. 15 is a block diagram of an HARQ-ACK feedback apparatus according to some embodiments. The apparatus includes a grouping module 1510 and an HARQ-ACK feedback module 1520.

The grouping module 1510 is configured to obtain at least one PDSCH group by grouping at least two target PDSCHs scheduled by a target DCI; in which each PDSCH group includes at least two target PDSCHs.

The HARQ-ACK feedback module 1520 is configured to, for target PDSCHs belonging to the same PDSCH group, feed back one piece of HARQ-ACK information, in which the HARQ-ACK information includes one or more bits.

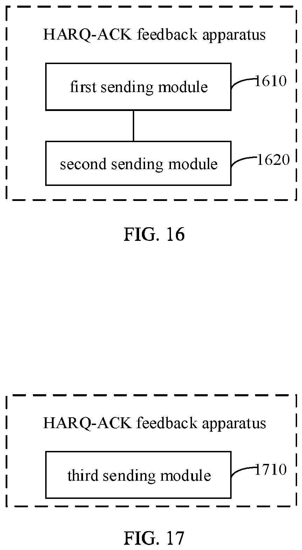

Referring to FIG. 16, FIG. 16 is a block diagram of an HARQ-ACK feedback apparatus according to some embodiments. The apparatus is applicable to a base station. The apparatus includes a first sending module 1610 and a second sending module 1620.

The first sending module 1610 is configured to send a target DCI for scheduling at least two target PDSCHs.

The second sending module 1620 is configured to send a target signaling, in which the target signaling is configured to instruct a terminal to perform HARQ-ACK bundling feedback on the at least two target PDSCHs scheduled by the target DCI.

Referring to FIG. 17, FIG. 17 is a block diagram of an HARQ-ACK feedback apparatus according to some embodiments. The apparatus is applicable to a base station. The apparatus includes a third sending module 1710.

The third sending module 1710 is configured to send a target DCI for scheduling at least two target PDSCHs; in which the target DCI is configured to instruct a terminal whether to perform HARQ-ACK bundling feedback on the at least two target PDSCHs scheduled by the target DCI.

For the apparatus embodiments, since they basically correspond the method embodiments, the relevant part can refer to the description of the method embodiments. The apparatus embodiments described above are merely illustrative. The modules described as separate components may or may not be physically separated, and the components displayed as modules may or may not be physical modules, that is, they may be located in one place or distributed to multiple network modules. Some or all of the modules can be selected according to actual needs to achieve the objectives of the solutions of the embodiments. Those of ordinary skill in the art can understand and implement without creative work.

Correspondingly, the disclosure also provides a computer-readable storage medium. A computer program is stored in the storage medium. The computer program is configured to execute any one of the above-described HARQ-ACK feedback methods for the terminal side.

Correspondingly, the disclosure also provides a computer-readable storage medium. A computer program is stored in the storage medium. The computer program is configured to execute any one of the above-described HARQ-ACK feedback methods for the base station side.

Correspondingly, the disclosure also provides an HARQ-ACK feedback device. The device includes:
a processor; and
a memory for storing instructions executable by the processor.

The processor is configured to perform any one of the HARQ-ACK feedback methods described on the terminal side.

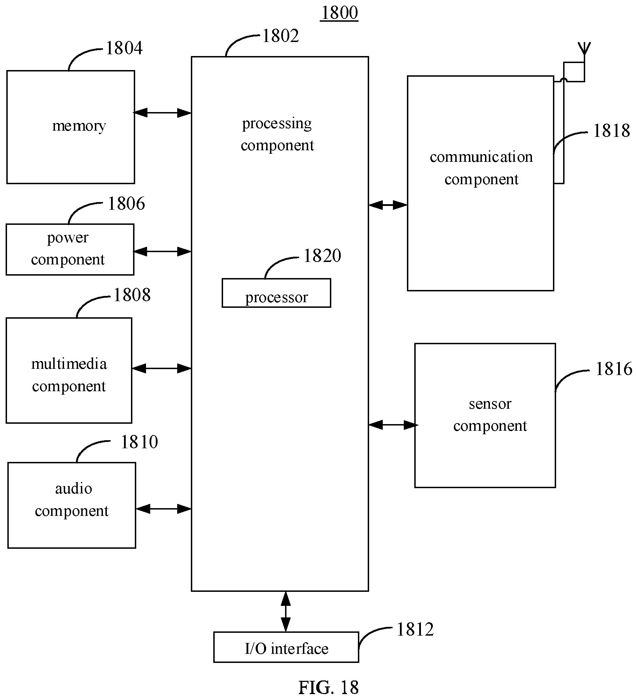

FIG. 18 is a block diagram of an electronic device 1800 according to some embodiments. For example, the electronic device 1800 may be a mobile phone, a tablet computer, an ebook reader, a multimedia play device, a wearable device, a vehicle terminal, an ipad, a smart TV, or other terminal.

Referring to FIG. 18, the electronic device 1800 may include one or more of the following components: a processing component 1802, a memory 1804, a power component 1806, a multimedia component 1808, an audio component 1810, an input/output (I/O) interface 1812, a sensor component 1816, and a communication component 1818.

The processing component 1802 typically controls overall operations of the electronic device 1800, such as the operations associated with display, telephone calls, data communications, camera operations, and recording operations. The processing component 1802 may include one or more processors 1820 to execute instructions to perform all or part of the steps in the above-described HARQ-ACK feedback methods. Moreover, the processing component 1802 may include one or more modules which facilitate the interaction between the processing component 1802 and other components. For instance, the processing component 1802 may include a multimedia module to facilitate the interaction between the multimedia component 1808 and the processing component 1802. In another example, the processing component 1802 may read executable instructions from the memory to perform the steps of the HARQ-ACK feedback methods described above in the embodiments.

The memory 1804 is configured to store various types of data to support the operation of the electronic device 1800. Examples of such data include instructions for any applications or methods operated on the electronic device 1800, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the electronic device 1800. The power component 1806 may include a power management system, one or more power sources, and any other components associated with the generation, management, and distribution of power in the electronic device 1800.

The multimedia component 1808 includes a screen providing an output interface between the electronic device 1800 and the user. In some embodiments, the multimedia component 1808 includes a front camera and/or a rear camera. The front camera and/or the rear camera may receive an external multimedia datum while the electronic device 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone ("MIC") configured to receive an external audio signal when the electronic device 1800 is in an operation mode, such as a call mode, a recording mode, and a voice recognition mode. The received audio signal may be further stored in the memory 1804 or transmitted via the communication component 1818. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1816 includes one or more sensors to provide status assessments of various aspects of the electronic device 1800. For instance, the sensor component 1816 may detect an open/closed status of the electronic device 1800, relative positioning of components, e.g., the display and the keypad, of the electronic device 1800, a change in position of the electronic device 1800 or a component of the electronic device 1800, a presence or absence of user contact with the electronic device 1800, an orientation or an acceleration/deceleration of the electronic device 1800, and a change in temperature of the electronic device 1800. The sensor component 1816 may include a proximity sensor configured to detect the presence of nearby objects without any physical contact. The sensor component 1816 may also include a light sensor, such as a CMOS or CCD image sensor, for use in imaging applications. In some embodiments, the sensor component 1816 may also include an accelerometer sensor, a gyroscope sensor, a magnetic sensor, a pressure sensor, or a temperature sensor.

The communication component 1818 is configured to facilitate communication, wired or wirelessly, between the electronic device 1800 and other devices. The electronic device 1800 can access a wireless network based on a communication standard, such as WiFi, second generation (2G), third gengeration (3G), fourth genetation (4G), fifth generation (5G) or sixth generation (6G), or a combination thereof. In one some embodiment, the communication component 1818 receives a broadcast signal or broadcast associated information from an external broadcast management system via a broadcast channel. In one some embodiment, the communication component 1818 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the electronic device 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described HARQ-ACK feedback methods.

In some embodiments, there is also provided a non-transitory computer readable storage medium including instructions, such as included in the memory 1804, executable by the processor 1820 in the electronic device 1800, for performing the above-described HARQ-ACK feedback methods. For example, the non-transitory computer-readable storage medium may be a ROM, a RAM, a CD-ROM, a magnetic tape, a floppy disc, an optical data storage device, and the like.

Correspondingly, the disclosure also provides an HARQ-ACK feedback device. The device includes:
a processor; and
a memory for storing instructions executable by the processor.

The processor is configured to perform any one of the HARQ-ACK feedback methods described on the base station side.

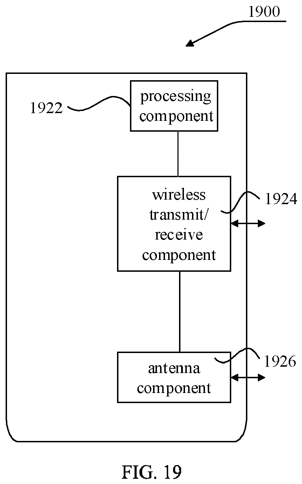

As illustrated in FIG. 19, FIG. 19 is a schematic structural diagram of another HARQ-ACK feedback device 1900 according to some embodiments. The device 1900 may be provided as a base station. Referring to FIG. 19, the device 1900 includes a processing component 1922, a wireless transmit/receive component 1924, an antenna component 1926, and a signal processing portion specific to a wireless interface. The processing component 1922 may further include one or more processors.

One of the processors in the processing component 122 may be configured to perform any one of the HARQ-ACK feedback methods described above at the base station side.

Other embodiments of the disclosure will be apparent to those skilled in the art from consideration of the specification and practice of the disclosure disclosed herein. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A hybrid automatic repeat request acknowledgment (HARQ-ACK) feedback method, applicable to a terminal, the method comprising:
obtaining at least one physical downlink control channel (PDSCH) group by grouping at least two target PDSCHs scheduled by a target downlink control information (DCI); wherein each PDSCH group comprises at least two target PDSCHs; and
for target PDSCHs belonging to the same PDSCH group, feeding back one piece of HARQ-ACK information, wherein the HARQ-ACK information comprises one or more bits.

2. The method of claim 1, wherein for the target PDSCHs belonging to the same PDSCH group, feeding back the one piece of HARQ-ACK information, comprises:
in response to the target PDSCHs belonging to the same PDSCH group being correctly decoded, feeding back an ACK through one bit for indicating that an HARQ-ACK result is successful; and
in response to any target PDSCH belonging to the same PDSCH group being incorrectly decoded, feeding back a negative ACK (NACK) through one bit for indicating that an HARQ-ACK result is failed.

3. The method of claim 1, further comprising:
receiving a target signaling; wherein the target signaling is configured to instruct the terminal to perform HARQ-ACK bundling feedback on the at least two target PDSCHs scheduled by the target DCI.

4. The method of claim 3, wherein obtaining the at least one PDSCH group by grouping the at least two target PDSCHs scheduled by the target DCI comprises:
determining a number of PDSCHs comprised in each PDSCH group according to configuration indication of the target signaling; and
obtaining the at least one PDSCH group by grouping the at least two target PDSCHs scheduled by the target DCI according to the number of PDSCHs comprised in each PDSCH group.

5. The method of claim 1, wherein the target DCI is configured to instruct the terminal whether to perform HARQ-ACK bundling feedback on the at least two target PDSCHs scheduled by the target DCI.

6. The method of claim 5, wherein obtaining the at least one PDSCH group by grouping the at least two target PDSCHs scheduled by the target DCI comprises:
in response to determining to perform HARQ-ACK bundling feedback according to the target DCI, determining a number of PDSCHs comprised in each PDSCH group according to indication of the target DCI; and
obtaining the at least one PDSCH group by grouping the at least two target PDSCHs scheduled by the target DCI according to the number of PDSCHs comprised in each PDSCH group.

7. The method of claim 1, wherein obtaining the at least one PDSCH group by grouping the at least two target PDSCHs scheduled by the target DCI comprises:
determining to perform HARQ-ACK bundling feedback according to a protocol agreement, and obtaining the at least one PDSCH group by grouping the at least two target PDSCHs scheduled by the target DCI.

8. The method of claim 1, wherein, for the target PDSCHs belonging to the same PDSCH group, feeding back the one piece of HARQ-ACK information, comprises:
for the target PDSCHs belonging to the same PDSCH group, feeding back the one piece of HARQ-ACK information on resources comprised in the same target physical uplink control channel (PUCCH).

9. The method of claim 1, further comprising:
in response to having configured both a first HARQ-ACK feedback mode based on code block groups and a second HARQ-ACK feedback mode based on PDSCH groups, using one of the first HARQ-ACK feedback mode or the second HARQ-ACK feedback mode as a target HARQ-ACK feedback mode according to a protocol agreement;
wherein obtaining the at least one PDSCH group by grouping the at least two target PDSCHs scheduled by the target DCI comprises:
in response to the target HARQ-ACK feedback mode being the second HARQ-ACK feedback mode, obtaining the at least one PDSCH group by grouping the at least two target PDSCHs scheduled by the target DCI.

10. The method of claim 1, wherein, for the target PDSCHs belonging to the same PDSCH group, feeding back the one piece of HARQ-ACK information, comprises:
in response to a persistent scheduling duration of the target PDSCHs belonging to the same PDSCH group being less than or equal to a channel coherence duration, for the target PDSCHs belonging to the same PDSCH group, feeding back the one piece of HARQ-ACK information.

11. An HARQ-ACK feedback method, applicable to a base station, the method comprising:
sending a target DCI for scheduling at least two target PDSCHs; and
sending a target signaling, wherein the target signaling is configured to instruct a terminal to perform HARQ-ACK bundling feedback on the at least two target PDSCHs scheduled by the target DCI.

12. The method of claim 11, wherein the target signaling is further configured to indicate a number of PDSCHs comprised in each PDSCH group.

13. An HARQ-ACK feedback method, applicable to a base station, the method comprising:
sending a target DCI for scheduling at least two target PDSCHs; wherein the target DCI is configured to instruct a terminal whether to perform HARQ-ACK bundling feedback on the at least two target PDSCHs scheduled by the target DCI.

14. The method of claim 13, wherein the target DCI is further configured to indicate a number of PDSCHs comprised in each PDSCH group.

15. An HARQ-ACK feedback apparatus, applicable to a terminal, the apparatus comprising:
a grouping module, configured to obtain at least one PDSCH group by grouping at least two target PDSCHs scheduled by a target DCI; wherein each PDSCH group comprises at least two target PDSCHs; and
an HARQ-ACK feedback module, is configured to, for target PDSCHs belonging to the same PDSCH group, feed back one piece of HARQ-ACK information, wherein the HARQ-ACK information comprises one or more bits.

16. An HARQ-ACK feedback apparatus, applicable to a base station, the apparatus comprising:
a first sending module, configured to send a target DCI for scheduling at least two target PDSCHs; and
a second sending module, configured to send a target signaling, wherein the target signaling is configured to instruct a terminal to perform HARQ-ACK bundling feedback on the at least two target PDSCHs scheduled by the target DCI.

17. An HARQ-ACK feedback apparatus, applicable to a base station, the apparatus comprising:
a third sending module, configured to send a target DCI for scheduling at least two target PDSCHs; wherein the target DCI is configured to instruct a terminal whether to perform HARQ-ACK bundling feedback on the at least two target PDSCHs scheduled by the target DCI.

18. A computer-readable storage medium, wherein the storage medium stores a computer program and the computer program is configured to execute the HARQ-ACK feedback method of any one of claims 1-10.

19. A computer-readable storage medium, wherein the storage medium stores a computer program and the computer program is configured to execute the HARQ-ACK feedback method of any one of claims 11-14.

20. An HARQ-ACK feedback device, comprising:
a processor; and
a memory for storing instructions executable by the processor,
wherein the processor is configured to perform the HARQ-ACK feedback method of any one of claims 1-10.

21. An HARQ-ACK feedback device, comprising:
a processor; and
a memory for storing instructions executable by the processor,
wherein the processor is configured to perform the HARQ-ACK feedback method of any one of claims 11-14.
